# EUROPEAN PATENT APPLICATION

(11) **EP 4 769 639 A1**
(43) Date of publication of application: **01.07.2026**
(21) Application number: 25772333.8
(22) Date of filing: 24.02.2025
(51) Int. Cl.: H01M 10/44, H01M 10/42, H01M 10/052, H02J 7/00

(54) **BATTERY MANAGEMENT APPARATUS AND BATTERY MANAGEMENT METHOD**

(30) Priority: 14.03.2024 KR 20240035928
(71) Applicant: LG Energy Solution, Ltd., Seoul 07335 (KR)
(72) Inventor: YOON, Yeo Kyung, Daejeon 34122 (KR); KIM, Ji Hyun, Daejeon 34122 (KR); KIM, Hwi Jung, Daejeon 34122 (KR); KIM, Jae Sung, Daejeon 34122 (KR)
(74) Representative: Plasseraud IP
(86) International application number: PCT/KR2025/002525
(87) International publication number: WO 2025/192894

(57) **Abstract**

A battery management device disclosed herein includes a temperature sensor configured to measure a temperature of a battery cell, a communication unit configured to receive a charging signal of the battery cell and a control unit configured to apply a current to a heating channel connecting electrodes of the same polarity based on the charging signal being a fast charging signal and stop applying the current based on a temperature of the battery cell received from the temperature sensor reaching a reference temperature.

## Description

### TECHNICAL FIELD

### Cross-reference to Related Applications

This application claims priority from Korean Patent Application No. 10-2024-0035928, filed on March 14, 2024, the disclosure of which is incorporated by reference herein.

### Technical Field

Embodiments disclosed herein relate to a battery management device and a battery management method.

### BACKGROUND ART

In recent years, research and development for secondary batteries have been actively conducted. Here, the secondary battery refers to a battery capable of being charged and discharged, including, in its meaning, all of the existing Ni/Cd battery, Ni/MH battery, and the like and a recent lithium-ion battery. Among secondary batteries, lithium-ion batteries have the advantage of having much higher energy density than the existing Ni/Cd batteries and Ni/MH batteries. In addition, lithium-ion batteries may be manufactured in a small size and light weight, and accordingly, are used as power sources for mobile devices. In addition, the lithium-ion batteries have expanded their range of use to power sources for electric vehicles, making the batteries attract attention as a next-generation energy storage medium.

As a method for charging these batteries, there are slow charging and fast charging, and in the case of fast charging, performance may deteriorate at a high charging rate and in low-temperature situation, and the possibility of lithium precipitation increases. Accordingly, research is ongoing to rapidly increase the temperature of battery cells to a certain level before fast charging.

### DISCLOSURE OF THE INVENTION

### TECHNICAL PROBLEM

According to an embodiment disclosed herein, there are provided a battery management device and a battery management method for reducing lithium precipitation that may occur during a fast charging process by increasing the temperature of a battery cell before fast charging.

The technical problems of the embodiments disclosed herein are not limited to those mentioned above, and other objectives not mentioned will be clearly understood by those skilled in the art from the following descriptions.

### TECHNICAL SOLUTION

A battery management device according to an embodiment includes a temperature sensor configured to measure a temperature of a battery cell, a communication unit configured to receive a charging signal of the battery cell and a control unit configured to apply a current to a heating channel connecting electrodes of the same polarity based on the charging signal being a fast charging signal and stop applying the current based on a temperature of the battery cell received from the temperature sensor reaching a reference temperature.

The battery cell may include a 4-lead battery cell, and the heating channel may connect a positive electrode and a positive electrode or a negative electrode and a negative electrode of the 4-lead battery cell.

The control unit may apply a current greater than or equal to a preset reference current to the heating channel before a fast charging start point in time.

The control unit may increase application of the current based on the temperature of the battery cell measured by the temperature sensor being below a preset threshold temperature at a point in time after a preset time has elapsed from the application of the current.

The control unit may increase or decrease application of the current depending on an overlapping degree of the battery cell.

The control unit may increase the application of the current based on the number of overlapping battery cells being less than or equal to a preset reference number.

A battery management method according to an embodiment includes measuring a temperature of a battery cell, receiving a charging signal of the battery cell, applying a current to a heating channel connecting electrodes of the same polarity based on the charging signal being a fast charging signal, and stopping applying the current based on a temperature of the battery cell received from a temperature sensor reaching a reference temperature.

The battery cell may include a 4-lead battery cell, and the heating channel may connect a positive electrode and a positive electrode or a negative electrode and a negative electrode of the 4-lead battery cell.

The applying of the current may include applying a current greater than or equal to a preset reference current to the heating channel before a fast charging start point in time.

The battery management method according to an embodiment may further include increasing application of the current based on the temperature of the battery cell measured by the temperature sensor being below a preset threshold temperature at a point in time after a preset time has elapsed from the application of the current.

The battery management method according to an embodiment may further include increasing or decreasing application of the current depending on an overlapping degree of the battery cells.

The battery management method according to an embodiment may further include increasing the application of the current based on the number of overlapping battery cells being less than or equal to a preset reference number.

### ADVANTAGEOUS EFFECTS

According to a battery management device according to an embodiment, heat can be generated by a battery cell itself without inserting a separate resistor inside the battery cell, and the temperature can be increased by uniformly distributing the temperature in a thickness direction of a battery stack.

### BRIEF DESCRIPTION OF THE DRAWINGS

FIG. 1 illustrates a block diagram showing a general battery system including a battery management device according to an embodiment.
FIG. 2 illustrates a block diagram showing a configuration of the battery management device according to an embodiment.
FIG. 3 schematically illustrates a flow for generating heat in the battery by the battery management device according to an embodiment.
FIG. 4 illustrates a structure of a battery cell that generates heat by the battery management device according to an embodiment.
FIG. 5 shows a graph comparing a heating rate of a battery management device according to an embodiment and that of the related art.
FIG. 6 shows a graph comparing a heating time of a battery management device according to an embodiment and that of the related art.
FIG. 7 illustrates a state of charge (SOC) according to temperature during a process of generating heat in a battery cell by a battery management device according to an embodiment.
FIG. 8 illustrates a control flow diagram of a battery management method according to an embodiment.

### MODE FOR CARRYING OUT THE INVENTION

Hereinafter, various embodiments disclosed herein will be described in detail with reference to the attached drawings. In the present disclosure, the same reference numerals are used for the same elements in the drawings, and duplicate descriptions for the same elements are omitted.

In various embodiments disclosed herein, specific structural or functional descriptions are merely exemplary for the purpose of describing the embodiments, and various embodiments disclosed herein may be implemented in various forms and should not be construed as being limited to the embodiments described herein.

As used in various embodiments, the terms such as "first," "second," "the first," "the second" or the like may modify various components, regardless of order and/or importance, but do not limit the components. For example, without departing from the scope of the embodiments disclosed herein, a first element may be termed a second element, and similarly, in reverse, a second element may be termed a first element.

The terms and phrases as used herein are merely provided to describe specific embodiments, and may not be intended to limit the scope of other embodiments. A singular form may include a plural form, unless the context clearly indicates otherwise.

All terms, including technical or scientific terms, as used here, may have the same meaning as commonly understood by a person skilled in the art to which the embodiments disclosed herein belong. Terms such as those defined in commonly-used dictionaries should be interpreted as having a meaning that is consistent with their meaning in the context of the relevant art and will not be interpreted in an idealized or overly formal sense unless expressly so defined here. In some cases, even terms defined here cannot be interpreted to exclude embodiments disclosed herein.

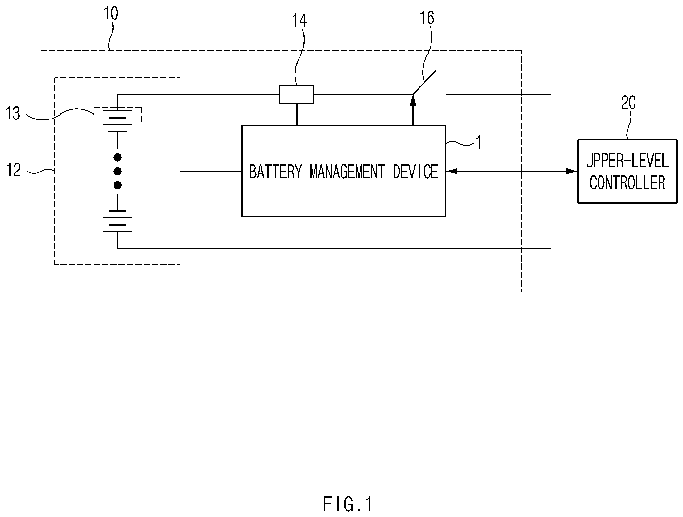

FIG. 1 illustrates a block diagram showing the configuration of a general battery system including a battery management device according to various embodiments.

Specifically, FIG. 1 schematically illustrates a battery system 10 and an upper-level controller 20 included in an upper-level system according to an embodiment disclosed herein.

As illustrated in FIG. 1, the battery system 10 may include a plurality of battery modules 12, a sensor unit 14, a switching unit 16, and a battery management device 1. In this case, the battery system 10 may be equipped with a plurality of battery modules 12, sensor units 14, switching units 16, and battery management devices 1.

The plurality of battery modules 12 may include at least one battery cell 13 capable of being charged and discharged. The battery cell 13 may include a positive electrode, a positive electrode material, a negative electrode, a negative electrode material, a separator, an electrolyte, a polymer, and a case. In this case, the plurality of battery modules 12 may be connected in series or parallel.

The sensor unit 14 may include a voltage sensor 2, a current sensor 3, and a temperature sensor (not illustrated).

The voltage sensor 2 may be configured to be connected in parallel to the battery to detect the battery voltage, which is the voltage across the battery and generate a voltage signal representing the detected battery voltage.

The current sensor 3 may detect a current used in a process of determining a state of charge (SOC) of the battery cell 13.

The current sensor 3 may include all components that generate a signal corresponding to the magnitude of a charging current, and the current sensor 3 may be installed on a charging/discharging path, which is a path through which a charging/discharging current flows in the battery.

The current sensor 3 may measure a battery current flowing in the battery, that is, the charging current and the discharging current, and transmit a measurement result to the battery management device 1. According to an embodiment, the current sensor 3 may measure the battery current at predetermined intervals during a charging cycle in which the battery is charged with power from an external device or during a discharging cycle in which the battery is discharged, and transmit a measurement result to the battery management device 1.

The temperature sensor 4 may be configured to measure the battery temperature and generate a temperature signal representing the measured battery temperature. The temperature sensor 4 may be disposed in a case to be able to measure a temperature close to the actual temperature of the battery. For example, the temperature sensor 4 may be attached to a surface of at least one battery cell included in a cell group and may detect a surface temperature of the battery cell as the battery temperature.

The temperature sensor 4 may be configured to measure the external temperature, which is the temperature at a predetermined position away from the battery, and generate a temperature signal representing the measured external temperature. The temperature sensor 4 may be disposed at a predetermined position outside the case where heat exchange between the battery and surrounding environments takes place. According to an embodiment, the temperature sensor 4 may be implemented as one or a combination of two or more of known temperature detection elements such as a thermocouple, a thermistor, a bimetal, or the like. The current flowing in the battery system 10 may be detected. In this case, a detected signal may be transmitted to the battery management device 1.

In FIG. 1, the sensor unit 14 is connected between the positive electrode of the battery cell 13 and the switching unit 16, but the components and the connection relationships between the components illustrated in FIG. 1 are only examples and are not limited thereto.

The switching unit 16 may be connected in series to a (+) terminal side or a (-) terminal side of the battery module 12 to control the charge/discharge current flow of the battery modules 12. For example, the switching unit 16 may use at least one relay, magnetic contactor, or the like depending on the specifications of the battery system 10.

The battery management device 1 may monitor the voltage, current, temperature, and the like of the battery system 10 to perform control and management to prevent overcharge, over-discharge, and the like, and may include, for example, a battery management system (BMS).

The battery management device 1 may be an interface for receiving values obtained by measuring various parameters, and may include a plurality of terminals, a circuit connected to the terminals to process input values, or the like. In addition, the battery management device 1 may control the ON/OFF of the switching unit 16, for example, a relay, a contactor, or the like, and may be connected to the battery modules 12 to monitor the state of each of the battery modules 12.

In addition, the battery management device 1 may obtain battery state information and manage the state of the battery by receiving temperature data, voltage data, and current data from the sensor unit 14.

In addition, the battery management device 1 may be provided as a server device, and the server device may be implemented as various computing devices such as a workstation, a cloud, a data drive, a data station, or the like. The server device may be implemented as one or more server devices that are physically or logically separated based on functions, detailed configuration of functions, data, or the like, and may transmit and receive data and process the transmitted and received data through communication between each server device. The upper-level controller 20 may transmit a control signal for controlling the battery modules 12 to the battery management device 1. Accordingly, the operation of the battery management device 1 may be controlled based on the control signal applied from the upper-level controller 20. In addition, the battery modules 12 may be a component included in an energy storage system (ESS). In this case, the upper-level controller 20 may be a controller (BBMS) of a battery bank including a plurality of battery systems 10 or an ESS controller that controls the entire ESS including a plurality of banks. However, the battery system 10 is not limited to these uses.

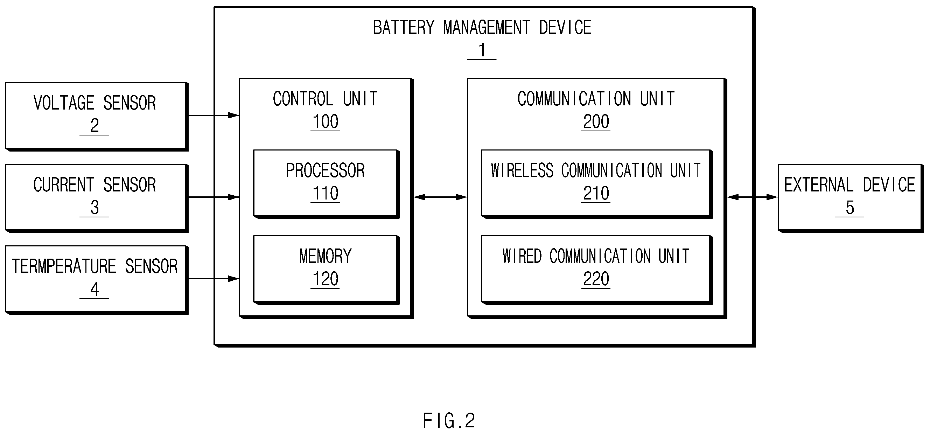

FIG. 2 illustrates a block diagram showing a configuration of the battery management device according to an embodiment.

Referring to FIG. 2, a battery management device 1 according to an embodiment includes a control unit 100 including at least one processor 110 and a memory 120 and a communication unit 200, and may manage a battery by communicating with an external device 5 through the communication unit 200.

According to an embodiment, the external device 5 communicating with the battery management device 1 may include a user terminal and a server device that transmit the state of the battery heated by the battery management device 1.

Specifically, when the external device 5 is a user terminal, the control unit 100 of the battery management device 1 may transmit the state of the battery to the user terminal so that the user may check the state. In this case, the user terminal may include a personal computer, a terminal, a portable telephone, a smartphone, a handheld device, a wearable device, or the like, but is not limited thereto.

In addition, when the external device 5 is a server device, the server device may be implemented as various computing devices such as a workstation, a cloud, a data drive, a data station, or the like. The server device may be implemented as one or more server devices that are physically or logically separated based on functions, detailed configuration of functions, data, or the like, and may transmit and receive data and process the transmitted and received data through communication between each server device.

The battery management device 1 according to an embodiment may refer to any electronic device including the processor 110 and the memory 120, and may be mounted in a vehicle and operated. Below, each component of the battery management device 1 is described in detail.

The communication unit 200 may include a wireless communication unit 210 and a wired communication unit 220 to communicate with the external device 5. The communication unit 200 may transmit and receive programs, various data, and the like for calculating battery cell characteristic values, classifying classes, and estimating the life from a separately provided external server.

The wireless communication unit 210 may include at least one of a short-range communication module and a long-range communication module.

The short-range communication module may communicate with the external device 5 adjacent to the battery management device 1 using a short-range communication method. Here, the short-range communication module may utilize one of the following communication methods: Bluetooth, Bluetooth low energy, infrared data association (IrDA), Zigbee, Wi-Fi, Wi-Fi direct, Ultra Wideband (UWB), or near field communication (NFC).

The long-range communication module may include a communication module that performs various types of long-range communications and may include a mobile communication unit. The mobile communication unit may transmit and receive wireless signals with at least one of a base station, an external terminal, or the external device 5 on a mobile communication network. In addition, the long-range communication module may communicate with the external device 5 such as an external device 5, another electronic device, or the like through a nearby access point (AP). The access point (AP) may connect a local area network (LAN) to which the battery management device 1 is connected to a wide area network (WAN) to which a communication server is connected. Accordingly, the battery management device 1 may be connected to the communication server with the external device 5 via the wide area network (WAN) to communicate with the external device 5.

The wired communication unit 220 may connect to a wired communication network and communicate with the external device 5 through the wired communication network. For example, the wired communication unit 220 may connect to the wired communication network via Ethernet (IEEE 802.3 technology standard), or connect to the wired communication network via can communication, and may transmit and receive data with the external devices 5 via the wired communication network.

The battery management device 1 according to an embodiment may include an input/output interface (not shown). An interface may be provided that connects an input device (not shown) such as a keyboard, a mouse, a touch panel, or the like and an output device such as a display (not shown), to the processor 110 to allow data transmission and reception.

The memory 120 may store various pieces of information required to operate the battery management device 1. Specifically, the memory 120 may store an operating system and a program required for operating the battery management device 1, or store data required for operating the battery management device 1.

Specifically, the memory 120 may store various programs related to calculating the characteristic value of the battery cell, classifying classes, and estimating the life. In addition, the memory 120 may store various data such as a voltage, a current, a temperature, and characteristic value data of each battery cell.

In addition, the memory 120 may store voltage application conditions and interruption conditions of the battery cell 13 utilized by the processor 110.

The memory 120 may include a volatile memory 120 such as a static random-access memory (S-RAM) or a dynamic random-access memory (D-RAM) for temporarily storing data. In addition, the memory 120 may include a non-volatile memory 120 such as a read only memory (ROM), an erasable programmable read only memory (EPROM), or an electrically erasable programmable read only memory (EEPROM) for long-term storage of data.

The processor 110 outputs a control signal to control the battery management device 1 as a whole. The processor 110 may include one or more central processing units (CPUs) and graphics processing units (GPUs). In this case, the processor 110 may be implemented as an array of a plurality of logic gates, or may be implemented as a combination of the general-purpose microprocessor 110 and the memory 120 storing a program that may be executed in the microprocessor 110.

The aforementioned memory 120 and processor 110 may be included in the control unit 100, and the control unit 100 may control the aforementioned components to generate a certain amount of heat in the battery cell before fast charging.

Specifically, the control unit 100 may apply a current to a heating channel connecting electrodes of the same polarity based on a charging signal being a fast charging signal to generate heat in the battery cell 13, and may stop applying the current when the temperature of the battery cell 13 reaches a reference temperature. That is, the control unit 100 may determine whether the charging signal for charging the battery cell 13 indicates slow charging or fast charging, and determining the charging signal by the control unit 100 may include a process of reading the type of signal received from a connector or a charger.

When it is determined that the type of battery charging is fast charging, the control unit 100 may heat the battery cell 13 by applying a current greater than or equal to a preset reference current to the heating channel before the fast charging start point in time. That is, the control unit 100 may control the battery cell 13 itself to generate heat by applying a current to the heating channel connecting the positive electrode and the positive electrode or the negative electrode and the negative electrode in advance before the fast charging start point in time. In this case, the battery cell 13 may include a 4-lead battery cell 13, and the 4-lead battery cell 13 may mean a battery cell 13 composed of two positive electrodes and two negative electrodes to include four leads.

In this case, when the battery management device 1 according to an embodiment is provided as a server device, applying a current to the heating channel or stopping the applying may mean that the control unit 100 transmits the control signal to the battery system 10 so that the current is applied to the heating channel or the applying is stopped.

With the battery management device 1 according to an embodiment, even though a separate resistor is not inserted into the battery cell 13, since the battery cell 13 itself may generate heat, an effect of uniformizing the temperature distribution inside the battery cell 13 may be achieved.

The control unit 100 may determine whether the temperature of the 4-lead battery cell 13 measured by the temperature sensor 4 is below a preset threshold temperature after a preset time has elapsed from application of the current to the 4-lead battery cell 13, and increase the application of the current for additional heat generation when the temperature of the 4-lead battery cell 13 is below the preset threshold temperature.

For example, when the temperature of the battery cell 13 does not increase to a target temperature even after the current is applied and the preset time has elapsed, the control unit 100 may determine that the cause is low ambient temperature and increase the application of the current to further increase the temperature of the battery cell 13.

Likewise, when the battery management device 1 according to an embodiment is provided as a server device, the control unit 100 may receive the temperature of the battery cell 13 from the temperature sensor and determine whether the temperature of the battery cell 13 is below the threshold temperature. Then, the control unit 100 may transmit a control signal to the battery system 10 so that an increased current is applied to the heating channel for additional heat generation when the temperature of the battery cell 13 is below the threshold temperature.

In addition, the control unit 100 may increase or decrease the application of the current depending on an overlapping degree of the battery cells 13, and specifically, the control unit 100 may increase the application of the current when the number of overlapping battery cells 13 is less than or equal to a preset reference number.

When the number of overlapping battery cells 13 is less than a reference number, a heating rate may be relatively low, and a battery heating time may increase, although the increase in time is not significant. Accordingly, the control unit 100 may increase the application of the current when the number of overlapping battery cells 13 is less than or equal to the reference number to deal with the problem of a long heating time.

In this case, a reference value for increasing the current applied by the control unit 100 may vary depending on the specifications of the battery and the usage environment and may be experimentally derived.

In this way, the battery management device 1 according to an embodiment may maximize the charging efficiency of the battery by increasing the temperature of the battery to a certain level within a safe range before rapidly charging the battery, thereby preventing battery performance degradation such as lithium precipitation.

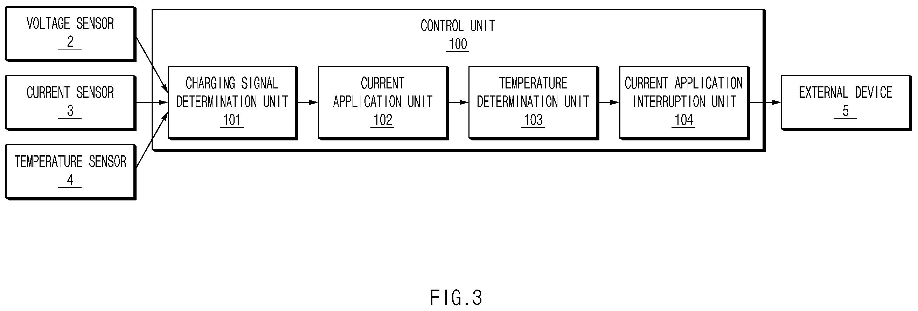

FIG. 3 schematically illustrates a flow for determining whether a battery is defective by the battery management device according to an embodiment. Components 101 to 104 in FIG. 3 are implemented in the form of software blocks and may be stored in the memory 120 and executed by the processor 110.

The control unit 100 may receive battery data of the battery cell 13 from the sensor unit, and specifically, the control unit 100 may receive voltage data from the voltage sensor 2, current data from the current sensor 3, and temperature data from the temperature sensor 4.

In a charging signal determination unit 101 of the control unit 100, the user may determine whether the signal for charging the battery is for slow charging or fast charging before the battery is charged. Specifically, the control unit 100 may determine the charging type utilizing various sensors and algorithms, and for example, the control unit 100 may determine that the charging is fast charging when a fast charging protocol is used by checking a charging protocol and property values, and specifically, the control unit 100 may communicate with the charger to check the charging protocol and properties in use.

In addition, the control unit 100 may recognize the characteristics of the charger to determine whether the charging is fast charging, and may recognize the characteristics of the charger connected to the battery and determine whether the charging is fast charging according to the type and characteristics of the charger.

Then, a current application unit 102 of the control unit 100 may determine how much current and voltage to apply to generate heat in the battery cell 13, and may determine a current supply path to apply a current to the heating channel.

In addition, the control unit 100 may determine the degree of overlap of the battery cells 13 to generate heat in the battery cells 13, and when the degree of overlap of the battery cells 13 is less than or equal to a preset reference number, the applied current may be increased.

Then, a temperature determination unit 103 of the control unit 100 may determine whether the temperature of the battery cell 13 has reached a preset reference temperature by determining the temperature after the current is applied. In this case, the control unit 100 may increase the application of the current when the temperature of the battery cell 13 does not reach the reference temperature even after the time expected to reach the target temperature has elapsed from the application of the current. On the other hand, the control unit 100 may determine whether the battery has overheated to a level exceeding the target temperature after the application of the current.

In a current application interruption unit 104 of the control unit 100, when it is determined that the temperature of the battery cell 13 has reached the target temperature after the preset time has elapsed, or when it is determined that the temperature has exceeded the target temperature even before the preset time has elapsed and has become overheated, the application of the current to the heating channel connecting the positive electrode and the positive electrode or the negative electrode and the negative electrode of the battery cell 13 may be interrupted.

In this case, the control unit 100 may determine an upper temperature limit value of the battery cell 13 in advance and determine that the battery cell 13 is overheated when the temperature of the battery cell 13 exceeds the upper temperature limit, or may utilize a temperature average value of the battery cells 13 to determine that a specified battery cell 13 is overheated when the difference between the temperature of the specific battery cell 13 and the temperature average value is greater than or equal to a preset reference difference.

Then, the control unit 100 may transmit information such as a heating state of the battery and a required time to the external device 5 including the user terminal through the communication unit 200.

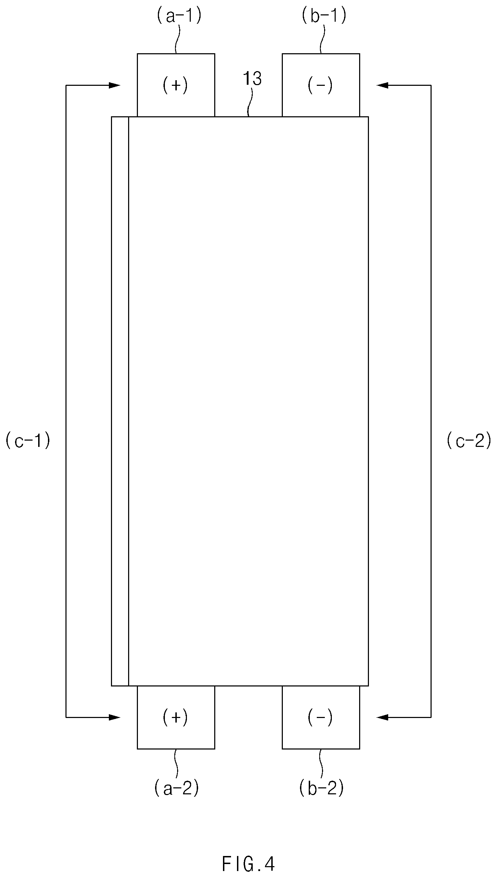

FIG. 4 illustrates a structure of a battery cell that generates heat by the battery management device according to an embodiment.

Referring to FIG. 4, a battery cell 13 that generates heat by the battery management device 1 according to an embodiment may include a 4-lead battery cell 13, and a structure of the 4-lead cell may include one of a positive electrode heating channel c-1 connecting a positive electrode a-1 and a positive electrode a-2 or a negative electrode heating channel c-2 connecting a negative electrode b-1 and a negative electrode b-2.

That is, in FIG. 4, both the positive electrode heating channel c-1 and the negative electrode heating channel c-2 are illustrated in the 4-lead battery cell 13, but this is exemplary and only one heating channel may be included. In this case, for the battery stack, since the number of negative electrodes is greater than that of the positive electrodes by one, for example, in the case of 12 stack battery cells 13, 12 positive electrode heating channels c-1 and 13 negative electrode heating channels c-2 may be provided.

Here, the heating channels c-1 and c-2 may refer to a conductor line that passes current between the positive electrode a-1 and the positive electrode a-2 or the negative electrode b-1 and the negative electrode b-2 terminals of the 4-lead battery cell 13.

In the 4-lead battery cells 13 according to an embodiment, since each battery stack may serve as a heating element, the amount of heat generated increases in proportion to the number of battery stacks based on the amount of heat generated by each battery stack, so that heating performance may be secured without a significant increase in the time required for fast charging.

In addition, there is no need to insert an additional resistor for heat generation in the 4-lead battery cell 13 according to an embodiment, and since the entire battery stack generates heat, the temperature difference between the surface and center of the battery stack is small, resulting in higher temperature uniformity compared to the related art.

For example, since the related art uses a method in which the nickel resistor inserted in the center generates heat rather than all the battery cells 13 included in the battery stack, a temperature difference of 10 degrees or more may occur between the surface and the center of the battery. Specifically, in in the related art, when the thermal conductivity in a planar direction of the battery stack is 45.5 W/mK, the thermal conductivity in a thickness direction may be 0.55 W/mK, which may exhibit a difference of approximately 83 times.

In the related art, when measuring the temperature based on the surface of the battery, assuming that a target heating temperature is 65 degrees, the temperature inside the battery would rise to 75 degrees, causing deterioration to accelerate due to increased side reactions inside the battery, which may result in reduced safety and performance of the battery.

On the other hand, with the battery management device 1 according to an embodiment, since all battery stacks constituting the battery generate heat, a temperature difference between the surface and the center hardly occurs at less than or equal to 1 degree, a phenomenon such as lithium plating may be prevented, and since the all battery stacks deteriorate in a similar pattern, there is an effect of improving the safety and performance of the battery.

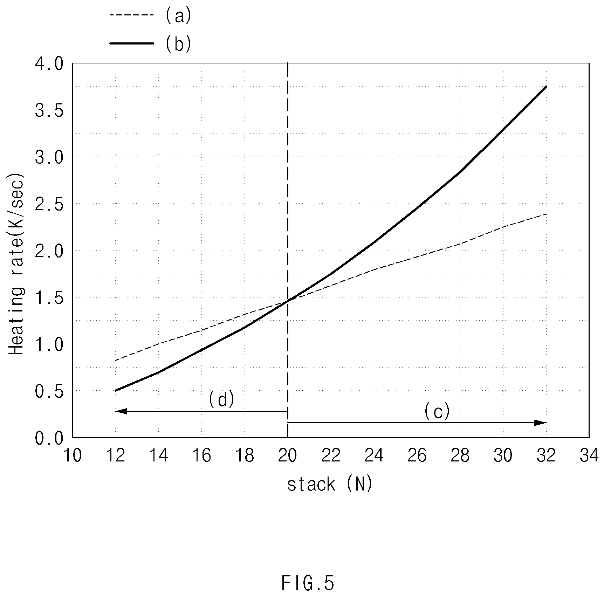

FIG. 5 shows a graph comparing a heating rate of a battery management device according to an embodiment and that of the related art.

Referring to FIG. 5, graph (a) refers to a battery heating rate by the related art, and graph (b) refers to a battery heating rate by the battery management device 1 according to an embodiment. In addition, a horizontal axis of the graph represents the number (N) of battery stacks indicating the number of battery cells 13 stacked, and a vertical axis of the graph represents a heating rate per second (K/sec).

First, the battery heating rate by the related art may increase proportionally as the battery stack increases, and for example, according to the related art, when the number of battery stacks is 14, a heating rate is approximately 1.0 K/sec, and when the number of battery stacks is 20, the heating rate may increase to approximately 1.5 K/sec.

Next, the battery heating rate by the battery management device 1 according to an embodiment may also be increased proportionally as the battery stack increases. For example, the battery management device 1 may increase the heating rate from approximately 0.7 K/sec when the number of the battery stacks is 14, to approximately 1.5 K/sec when the number of the battery stacks is 20.

As shown in FIG. 5, since the increase in the heating rate is greater in the battery management device 1 according to an embodiment, in the case of a first region (d) where the number of battery stacks is less than 20, the heating rate of the related art may be higher, whereas in the case of a second region (c) where the number of battery stacks exceeds 20, the heating rate of the battery management device 1 according to an embodiment may be higher.

However, the battery management device 1 according to an embodiment may increase the application of the current in the case of the first region (d) where the number of stacks, which is the number of overlapping battery cells 13, is less than or equal to a preset reference number. That is, in the case of the first region (d) in which the number of stacks of battery cells 13 in FIG. 5 is 20 or less, since the heating rate may be improved by increasing the application of the current, a higher heating rate may be secured compared to the related art in all stack numbers.

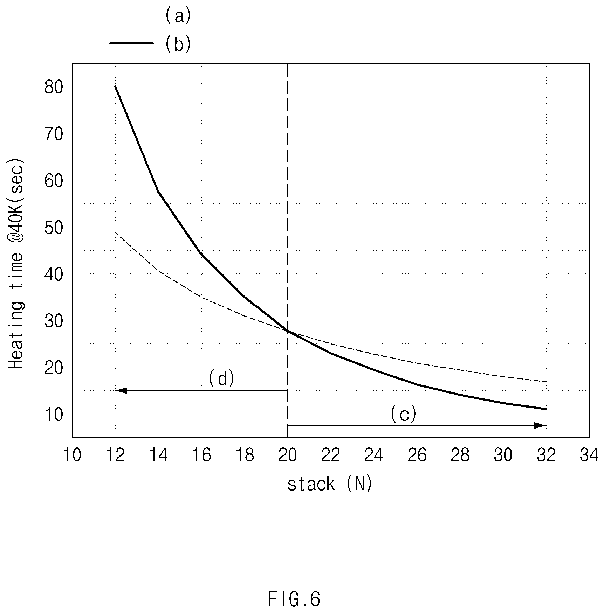

FIG. 6 shows a graph comparing a heating time of a battery management device according to an embodiment and that of the related art.

Referring to FIG. 6, graph (a) refers to a battery heating time by the related art, and graph (b) refers to a battery heating time by the battery management device 1 according to an embodiment. In addition, a horizontal axis of the graph represents the number of battery stacks (N) indicating the number of battery cells 13 stacked, and a vertical axis of the graph represents a heating time (sec) required to increase the temperature of the battery to 40 degrees.

First, the battery heating time by the related art may be reduced proportionally as the battery stack increases, and for example, according to the related art, when the number of battery stacks is 14, the heating time to increase the temperature to 40 degrees is approximately 40 seconds, and when the number of battery stacks is 20, the heating time may decrease to approximately 28 seconds.

Next, the 40-degree heating time by the battery management device 1 according to an embodiment may also be reduced proportionally as the battery stack increases, and for example, the battery management device 1 may reduce the 40-degree heating time from approximately 58 seconds when the number of battery stacks is 14 to approximately 28 seconds when the number of battery stacks is 20.

However, as shown in FIG. 6, since the reduction in the heating rate is greater in the battery management device 1 according to an embodiment, in the case of a first region (d) where the number of battery stacks is less than 20, the heating time of the related art may be shorter, whereas in the case of a second region (c) where the number of battery stacks exceeds 20, the heating time of the battery management device 1 according to an embodiment may be shorter.

In addition, the battery management device 1 according to an embodiment may increase the application of the current in the case of the first region (d) where the number of stacks, which is the number of overlapping battery cells 13, is less than or equal to a preset reference number. That is, in the case of the first region (d) in which the number of stacks of battery cells 13 in FIG. 6 is 20 or less, since the heating time may be shortened by increasing the application of the current, a shorter heating time may be secured compared to the related art in all stack numbers.

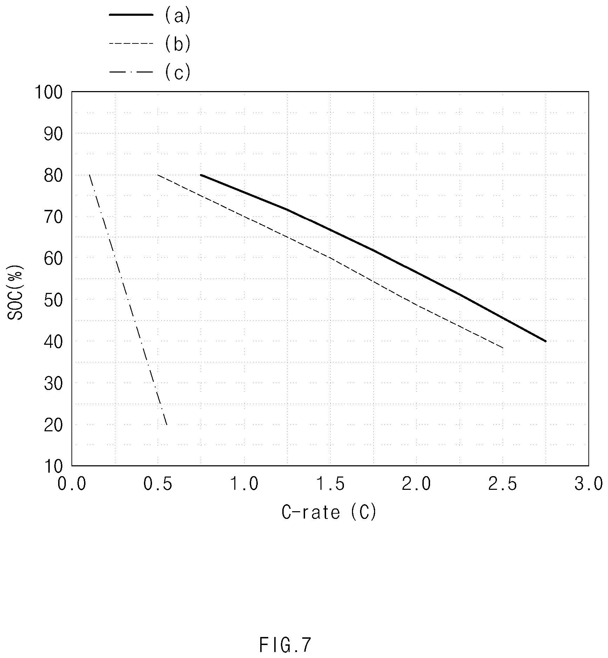

FIG. 7 illustrates a state of charge (SOC) according to temperature during a process of generating heat in a battery cell by a battery management device according to an embodiment.

Referring to FIG. 7, a horizontal axis of a graph represents a charge/discharge rate (C-rate), and a vertical axis of the graph represents the state of charge (SOC) indicating the degree of charging.

In addition, graph (a) represents the SOC value according to the charge/discharge rate (C-rate) after heating the 4-lead battery cell 13 to a temperature of 45 degrees, graph (b) represents the SOC value according to the charge/discharge rate (C-rate) after heating the 4-lead battery cell 13 to a temperature of 25 degrees, and graph (c) represents the SOC value according to the charge/discharge rate (C-rate) after heating the 4-lead battery cell 13 to a temperature of -10 degrees.

It may be assumed that a fast charging completion time in graph (a) takes 23 minutes, the fast charging completion time in graph (b) takes 29 minutes, and the fast charging completion time in graph (c) takes 184 minutes.

In this case, with the battery management device 1 according to an embodiment, in graph (b), since it takes 40 seconds in the process of increasing the temperature of the battery to 45 degrees as in graph (a), the total fast charging completion time may be reduced from 29 minutes to 23 minutes and 40 seconds, and in graph (c), since it takes 69 seconds in the process of increasing the temperature of the battery to 25 degrees as in graph (b), the total fast charging completion time may be reduced from 184 minutes to 30 minutes and 09 seconds.

In addition, since the battery itself generates heat during the process of performing fast charging by the battery management device 1 according to an embodiment, the fast charging completion time may be further reduced. In this way, with the battery management device 1 according to an embodiment, there is a remarkable effect of eliminating the risk of lithium precipitation in the process of increasing the charge/discharge rate (C-rate) according to the temperature rise of the battery cell 13.

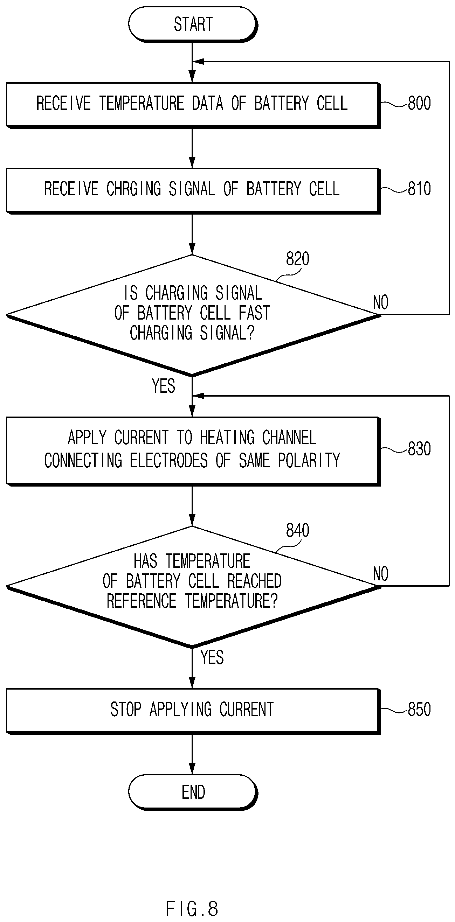

FIG. 8 illustrates a control flow diagram of a battery management method according to an embodiment.

Referring to FIG. 8, the control unit 100 may receive temperature data of the battery cell 13 through the temperature sensor 4 or the communication unit 200 (800) and may receive a charging signal of the battery cell 13 (810).

Then, the control unit 100 may determine whether the charging signal of the battery cell 13 is a fast charging signal (820), and when the charging signal of the battery cell 13 is the fast charging signal (YES in 820), may apply a current to a heating channel connecting electrodes of the same polarity (830).

The control unit 100 may apply the current to the heating channel connecting the positive and positive electrodes or the negative and negative electrodes of the 4-lead battery cell 13 and determine whether the temperature of the battery cell 13 has reached a reference temperature (840). When it is determined that the temperature of the battery cell 13 has reached the reference temperature (YES in 840), application of the current may be stopped (850) to prevent overheating of the battery cell 13.

The battery management method according to an embodiment may operate in a separate management device for managing the battery, or may operate in a server including various computing devices such as a workstation, a cloud, a data drive, a data station, and the like.

As described above, since the battery management device 1 according to an embodiment may induce overall heating of the 4-lead battery cell 13, the temperature uniformity of the entire battery may be improved, and thus lithium plating due to temperature deviation may be prevented and there is an effect of improving the speed of fast charging.

Meanwhile, the disclosed embodiments may be implemented in the form of a recording medium storing instructions executable by a computer. Instructions may be stored in the form of program codes, and when executed by a processor, may create program modules to perform operations of the disclosed embodiments. The recording medium may be implemented as a computer-readable recording medium.

The computer-readable recording medium includes all types of recording media in which instructions capable of being decoded by a computer are stored. For example, there may be a read only memory (ROM), a random-access memory (RAM), a magnetic tape, a magnetic disk, a flash memory, an optical data storage device, and the like.

In addition, the computer-readable recording medium may be provided in the form of a non-transitory storage medium. Wherein, the "non-transitory storage medium" simply means that the storage medium is a tangible device, and does not include a signal (e.g., an electromagnetic wave), but this term does not differentiate between where data is semi-permanently stored in the storage medium and where the data is temporarily stored in the storage medium. For example, the "'non-transitory storage medium" may include a buffer in which data is temporarily stored.

According to an embodiment, a method according to various embodiments disclosed herein may be included and provided in a computer program product. The computer program product may be traded as a product between a seller and a buyer. The computer program product may be distributed in the form of a machine-readable recording medium (e.g., compact disc read only memory (CD-ROM)), or be distributed (e.g., downloaded or uploaded) online via an application store (e.g., PlayStore^{™}), or between two user devices (e.g., smartphones) directly. When distributed online, at least part of the computer program product (e.g., a downloadable app) may be temporarily generated or at least temporarily stored in the machine-readable recording medium, such as the memory 102 of the manufacturer's server, a server of the application store, or a relay server.

Although all the components constituting the embodiments disclosed herein have been described as being combined or operating in combination as one, the embodiments disclosed herein are not necessarily limited to these embodiments. That is, within the scope of the purpose of the embodiments disclosed herein, all of the components may be selectively combined and operated one or more times.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

## Claims

1. A battery management device comprising:
a communication unit configured to receive temperature data of a battery cell and a charging signal of the battery cell; and
a control unit configured to apply a current to a heating channel connecting electrodes of the same polarity based on the charging signal being a fast charging signal and stop applying the current based on a temperature of the battery cell received from a temperature sensor reaching a reference temperature.

2. The battery management device of claim 1, wherein the battery cell includes a 4-lead battery cell, and
the heating channel connects a positive electrode and a positive electrode or a negative electrode and a negative electrode of the 4-lead battery cell.

3. The battery management device of claim 1, wherein the control unit applies a current greater than or equal to a preset reference current to the heating channel before a fast charging start point in time.

4. The battery management device of claim 1, wherein the control unit increases application of the current based on the temperature of the battery cell measured by the temperature sensor being below a preset threshold temperature at a point in time after a preset time has elapsed from the application of the current.

5. The battery management device of claim 1, wherein the control unit increases or decreases application of the current depending on an overlapping degree of the battery cells.

6. The battery management device of claim 5, wherein the control unit increases the application of the current based on the number of overlapping battery cells being less than or equal to a preset reference number.

7. A battery management method, comprising:
measuring a temperature of a battery cell;
receiving a charging signal of the battery cell;
applying a current to a heating channel connecting electrodes of the same polarity based on the charging signal being a fast charging signal; and
stopping applying the current based on a temperature of the battery cell received from a temperature sensor reaching a reference temperature.

8. The battery management method of claim 7, wherein the battery cell includes a 4-lead battery cell, and
the heating channel connects a positive electrode and a positive electrode or a negative electrode and a negative electrode of the 4-lead battery cell.

9. The battery management method of claim 7, wherein the applying of the current includes applying a current greater than or equal to a preset reference current to the heating channel before a fast charging start point in time.

10. The battery management method of claim 7, further comprising increasing application of the current based on the temperature of the battery cell measured by the temperature sensor being below a preset threshold temperature at a point in time after a preset time has elapsed from the application of the current.

11. The battery management method of claim 7, further comprising increasing or decreasing application of the current depending on an overlapping degree of the battery cells.

12. The battery management method of claim 11, further comprising increasing the application of the current based on the number of overlapping battery cells being less than or equal to a preset reference number.
